(19) **Europäisches Patentamt**
**European Patent Office**
**Office européen des brevets**

(11) **EP 4 016 903 B1**

(12) **EUROPEAN PATENT SPECIFICATION**

(45) Date of publication and mention
of the grant of the patent:
**18.09.2024 Bulletin 2024/38**

(21) Application number: **20852242.5**

(22) Date of filing: **10.08.2020**

(51) International Patent Classification (IPC):
**H04L 5/00** *(2006.01)*  **H04W 72/04** *(2023.01)*
**H04L 1/00** *(2006.01)*  **H04L 1/16** *(2023.01)*

(52) Cooperative Patent Classification (CPC):
**H04L 5/0053; H04L 1/0023;** H04L 1/1671;
H04L 5/0007

(86) International application number:
**PCT/CN2020/108227**

(87) International publication number:
**WO 2021/027780 (18.02.2021 Gazette 2021/07)**

(54) **INFORMATION PROCESSING METHOD, DEVICE AND COMPUTER-READABLE STORAGE MEDIUM**

INFORMATIONSVERARBEITUNGSVERFAHREN, VORRICHTUNG UND COMPUTERLESBARES SPEICHERMEDIUM

PROCÉDÉ DE TRAITEMENT D'INFORMATIONS, DISPOSITIF ET SUPPORT D'INFORMATIONS LISIBLE PAR ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.08.2019 CN 201910748114**

(43) Date of publication of application:
**22.06.2022 Bulletin 2022/25**

(73) Proprietor: **Vivo Mobile Communication Co., Ltd. Dongguan, Guangdong 523863 (CN)**

(72) Inventors:
• **LI, Na**
**Dongguan, Guangdong 523863 (CN)**
• **SHEN, Xiaodong**
**Dongguan, Guangdong 523863 (CN)**

(74) Representative: **Winter, Brandl - Partnerschaft mbB**
**Alois-Steinecker-Straße 22**
**85354 Freising (DE)**

(56) References cited:
EP-A1- 3 461 050    EP-A1- 3 618 328
WO-A1-2020/205741    CN-A- 106 470 089
CN-A- 106 559 198    CN-A- 107 241 802

US-A1- 2016 036 578    US-A1- 2018 220 413

• ERICSSON: "UL signals and channels for NR-U", vol. RAN WG1, no. Reno, NV, USA; 20190513 - 20190517, 13 May 2019 (2019-05-13), XP051728884, Retrieved from the Internet <URL:http://www.3gpp.org/ftp/Meetings%5F3GPP%5FSYNC/RAN1/Docs/R1%2D1907453%2Ezip> [retrieved on 20190513]
• MEDIATEK INC.: "Enhancements to HARQ for NR-U operation", 3GPP DRAFT; R1-1906545_ENHANCEMENTS TO HARQ FOR NR-U OPERATION_MTK_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Reno, USA; 20190513 - 20190517, 13 May 2019 (2019-05-13), Mobile Competence Centre ; 650, route des Lucioles ; F-06921 Sophia-Antipolis Cedex ; France, XP051727996

**(Cont. next page)**

- HUAWEI, HISILICON: "HARQ enhancements in NR unlicensed", 3GPP DRAFT; R1-1906046, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Reno, USA; 20190513 - 20190517, 13 May 2019 (2019-05-13), Mobile Competence Centre ; 650, route des Lucioles ; F-06921 Sophia-Antipolis Cedex ; France, XP051727503
- SONY: "HARQ enhancement for NR-U", 3GPP DRAFT; R1-1906836, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Reno, USA; 20190513 - 20190517, 13 May 2019 (2019-05-13), Mobile Competence Centre ; 650, route des Lucioles ; F-06921 Sophia-Antipolis Cedex ; France, XP051728287
- HUAWEI, HISILICON: "UL intra-UE multiplexing between control channels", 3GPP DRAFT; R1-1907547, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Reno, USA; 20190513 - 20190517, 13 May 2019 (2019-05-13), Mobile Competence Centre ; 650, route des Lucioles ; F-06921 Sophia-Antipolis Cedex ; France, XP051728980
- QUALCOMM INCORPORATED: "UCI Enhancements for eURLLC", 3GPP DRAFT; R1-1907282 UCI ENHANCEMENTS FOR EURLLC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Reno, Nevada, U.S.A.; 20190513 - 20190517, 13 May 2019 (2019-05-13), Mobile Competence Centre ; 650, route des Lucioles ; F-06921 Sophia-Antipolis Cedex ; France, XP051728722
- SONY: "UCI enhancements for eURLLC", 3GPP DRAFT; R1-1906841 - REL-16 EURLLC - UCI V03, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Reno, USA; 20190513 - 20190517, 13 May 2019 (2019-05-13), Mobile Competence Centre ; 650, route des Lucioles ; F-06921 Sophia-Antipolis Cedex ; France, XP051728292

**Description**

**CROSS-REFERENCE TO RELATED APPLICATIONS**

This application claims priority to Chinese Patent Application No. 201910748114.7 filed in China on August 13, 2019.

**TECHNICAL FIELD**

The present disclosure relates to the field of communications technologies, and in particular, to an information processing method, a device, and a computer-readable storage medium.

**BACKGROUND**

In a future communications system, an unlicensed band (unlicensed band) may be used to supplement a licensed band (licensed band), to help an operator expand services. To keep consistency with new radio (New Radio, NR) deployment and maximize NR-based unlicensed access as much as possible, the unlicensed band may be in 5 GHz, 37 GHz, and 60 GHz bands. A large bandwidth (80 or 100 MHz) of the unlicensed band can reduce implementation complexity of a base station and a terminal device.

For a 5G communications system running on an unlicensed band (for example, 5 GHz), interlaced resource blocks (interlace) are used as allocation units for uplink transmission to meet a spectrum occupation requirement in the unlicensed band and increase uplink transmission coverage under a spectral power density requirement. In terms of physical uplink control channel (Physical Uplink Control Channel, PUCCH) design, to adapt to the interlaced resource block structure in an unlicensed 5G communications system, enhancement is also made on the basis of PUCCH in a licensed 5G communications system, but the enhancement is based on a 20 MHz bandwidth. In the 20 MHz bandwidth, the PUCCH must occupy at least one entire interlace. However, in some cases, the terminal device does not necessarily need to use such configuration. In these cases, use of the transmission mode in the prior art leads to lower resource utilization.

EP 3 461 050 A1 discloses a method for transmitting and receiving a physical uplink control channel (PUCCH) between a terminal and a base station, and a device for supporting same. US 2018/0220413 A1 discloses a method and apparatus for sending uplink control information. US 2016/0036578 A1 discloses transmission of uplink control channels over an unlicensed radio frequency spectrum band. EP 3 618 328 A1 discloses a method for transmitting and receiving an uplink signal between a terminal and a base station in a wireless communication system for supporting an unlicensed band, and an apparatus for supporting same. WO 2020/205741 A1 discloses a resource allocation and user multiplexing capacity enhancements for interlace based physical uplink control channel (PUCCH) formats in new radio (NR) using unlicensed spectrum (NR-U).

**SUMMARY**

Embodiments of the present disclosure provide an information processing method, a device, and a computer-readable storage medium, as defined in the appended set of claims, to resolve a problem of low resource utilization.

In the embodiments of the present disclosure, information required for actually transmitting the PUCCH can be adjusted based on the characteristic parameter of the UCI to be fed back, so that resource utilization is improved.

**BRIEF DESCRIPTION OF DRAWINGS**

To describe the technical solutions in the embodiments of the present disclosure more clearly, the following briefly described the accompanying drawings required for describing the embodiments of the present disclosure. Apparently, the accompanying drawings in the following description show merely some embodiments of the present disclosure, and a person of ordinary skill in the art may still derive other drawings from these accompanying drawings without creative efforts. The scope of the invention is defined by the scope of the appended claims.

FIG. 1 is a first flowchart of an information processing method according to an embodiment of the present disclosure;
FIG. 2 is a second flowchart of information processing method according to an embodiment of the present disclosure;
FIG. 3 is a third flowchart of information processing method according to an embodiment of the present disclosure;
FIG. 4 is a fourth flowchart of information processing method according to an embodiment of the present disclosure;
FIG. 5(a) to FIG. 5(c) are schematic diagrams of PUCCH transmission according to an embodiment of the present disclosure;

FIG. 6(a) to FIG. 6(c) are schematic diagrams of PUCCH transmission according to an embodiment of the present disclosure;
FIG. 7 is a first structural diagram of a communications device according to an embodiment of the present disclosure;
FIG. 8 is a first structural diagram of a terminal device according to an embodiment of the present disclosure;
FIG. 9 is a second structural diagram of a terminal device according to an embodiment of the present disclosure;
FIG. 10 is a first structural diagram of a network-side device according to an embodiment of the present disclosure;
FIG. 11 is a third structural diagram of a terminal device according to an embodiment of the present disclosure; and
FIG. 12 is a second structural diagram of a network-side device according to an embodiment of the present disclosure.

## DETAILED DESCRIPTION OF EMBODIMENTS

The following clearly and completely describes the technical solutions in the embodiments of the present disclosure with reference to the accompanying drawings in the embodiments of the present disclosure. Apparently, the described embodiments are some but not all of the embodiments of the present disclosure. The protection scope of the present disclosure is defined in the appended set of claims.

**Embodiment 1**

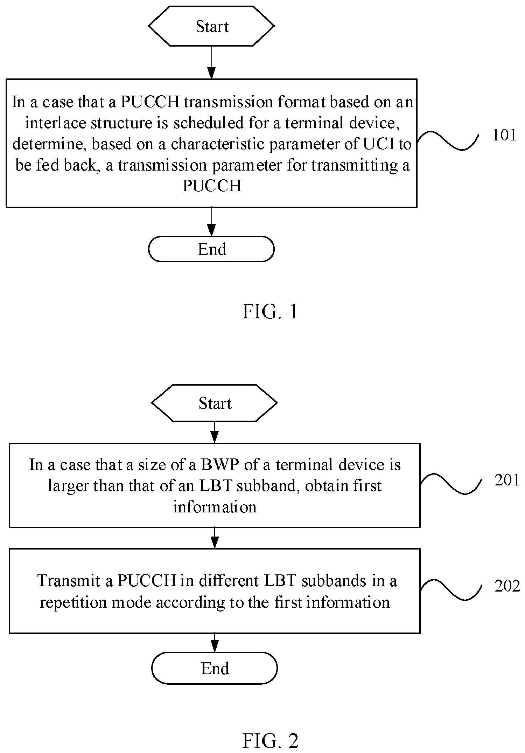

FIG. 1 is a flowchart of an information processing method according to this embodiment of the present disclosure. As shown in FIG. 1, the method includes the following step.
Step 101: In a case that a PUCCH transmission format based on an interlace structure is scheduled for a terminal device, determine, based on a characteristic parameter of UCI to be fed back, a transmission parameter for transmitting a PUCCH.
The transmission parameter includes at least one of the following:

the number of interlaces for transmitting the PUCCH according to the invention as claimed;
the number of orthogonal frequency division multiplex (orthogonal frequency division multiplex, OFDM) symbols for transmitting the PUCCH;
a spreading factor for transmitting the PUCCH; and
an orthogonal sequence for transmitting the PUCCH.

Particularly, in a case that the PUCCH transmission format based on the interlace structure is scheduled for the terminal device and the PUCCH transmission format can support UCI of more than two bits, at least one of the foregoing information is determined.
The characteristic parameter includes a bit quantity of the UCI, or, according to the invention as claimed, a bit quantity and a code rate of the UCI.
According to the invention as claimed, a transmission parameter satisfying a preset condition when the PUCCH is transmitted is determined based on the characteristic parameter of the UCI. The preset condition is: a code rate of uplink information to be transmitted on the PUCCH is lower than or equal to a configured code rate; and the uplink information includes the UCI, or, according to the invention as claimed, the uplink information includes the UCI and a cyclic redundancy check (Cyclic redundancy check, CRC). The configured code rate may be configured by a network-side device.
The following describes in detail how to determine the foregoing information.

(1) The determining a transmission parameter satisfying a preset condition for transmitting the PUCCH includes: determining the minimum number of interlaces satisfying the preset condition.

For example, when the UCI is sent, if the number of UCI bits is greater than 2 and less than or equal to 11, an RM (Reed-Muller) coding mode is used for the UCI, there is no need to add a CRC, and a code rate of carried information represents the code rate of the UCI; or if the number of UCI bits is greater than 11, polar (polar) coding is used, a CRC bit needs to be added for checking, and a code rate of carried information is a code rate of the UCI plus the CRC.
Specifically, in an actual application, by using radio resource control (Radio Resource Control, RRC) signaling, a base station configures PUCCH resource parameters, including a start interlace index $S_{interlace}^{PUCCH}$ corresponding to an allocated interlace, the number $N_{interlace}^{PUCCH}$ of interlaces, a start OFDM symbol position $S_{symbol}^{PUCCH}$, the number

$N_{symbol}^{PUCCH}$ of OFDM symbols, a spreading factor $N_{SF}^{PUCCH}$, an orthogonal sequence $w_n$, a code rate $r$, and the like.

In this case, a minimum M satisfying the following inequality can be determined, and the minimum M is used as the number of interlaces for transmitting the PUCCH, where M is a positive integer:

$$O_{UCI} + O_{CRC} \leq M_{PRB}^{PUCCH} \cdot N_{sc,ctrl}^{RB} \cdot N_{symbol}^{PUCCH} \cdot Q_m \cdot r,$$

where

$$M_{PRB}^{PUCCH} = \sum_{j=S_{interlace}^{PUCCH}}^{S_{interlace}^{PUCCH}+M} N_{PRB}^{interlace,j}, M \leq N_{interlace}^{PUCCH},$$

$O_{UCI}$ represents a bit quantity of the UCI; $O_{CRC}$ represents a bit quantity of the CRC; $M_{PRB}^{PUCCH}$ represents the number of PRBs included in M interlaces, that is, the number of PRBs for transmitting the PUCCH; $N_{sc,ctrl}^{RB}$ represents the number of subcarriers for transmitting control information in one PRB, for example, $N_{sc,ctrl}^{RB} = N_{sc}^{RB} - 4$ for an NR R15 PUCCH format 2, $N_{sc,ctrl}^{RB} = N_{sc}^{RB}$ for a PUCCH format 3, or $N_{sc,ctrl}^{RB} = N_{sc}^{RB} / N_{SF}^{PUCCH,4}$ for a PUCCH format 4; $N_{sc}^{RB}$ represents the number of subcarriers in one PRB, that is, mapping of $N_{sc,ctrl}^{RB}$ with a demodulation reference signal (Demodulation Reference Signal, DMRS) of the PUCCH format, which is related to whether there is a spreading factor; $N_{symbol}^{PUCCH}$ represents the number of OFDM symbols configured by the network-side device; $Q_m$ represents an order of modulation and coding; $r$ represents the code rate; $N_{interlace}^{PUCCH}$ represents the number of interlaces configured by the network-side device; and $N_{PRB}^{interlace,j}$ represents the number of PRBs included in an interlace whose index is j.

When $M = N_{interlace}^{PUCCH}$, if $O_{UCI} + O_{CRC} > M_{PRB}^{PUCCH} \cdot N_{sc,ctrl}^{RB} \cdot N_{symbol}^{PUCCH} \cdot Q_m \cdot r$, the number of interlaces for transmitting the PUCCH by the UE is $N_{interlace}^{PUCCH}$, that is, the UE uses the number of interlaces configured by using RRC, to transmit the PUCCH.

(2) The determining a transmission parameter satisfying a preset condition for transmitting the PUCCH includes: determining the minimum number of OFDM symbols satisfying the preset condition.

Specifically, in an actual application, a minimum $N$ satisfying the following inequality is determined, and the minimum N is used as the number of OFDM symbols for transmitting the PUCCH, where N is a positive integer:

$$O_{UCI} + O_{CRC} \leq M_{PRB}^{PUCCH} \cdot N_{sc,ctrl}^{RB} \cdot N \cdot Q_m \cdot r,$$

$$N \leq N_{symbol}^{PUCCH};$$

where

$O_{UCI}$ represents a bit quantity of the UCI; $O_{CRC}$ represents a bit quantity of the CRC; $M_{PRB}^{PUCCH}$ represents the number of PRBs included in $N_{interlace}^{PUCCH}$ interlaces configured by the network-side device, that is, the number of PRBs for transmitting the PUCCH; $N_{sc,ctrl}^{RB}$ represents the number of subcarriers for transmitting control information in one PRB, for example, $N_{sc,ctrl}^{RB} = N_{sc}^{RB} - 4$ for an NR R15 PUCCH format 2, $N_{sc,ctrl}^{RB} = N_{sc}^{RB}$ for a PUCCH format 3, or $N_{sc,ctrl}^{RB} = N_{sc}^{RB} / N_{SF}^{PUCCH,4}$ for a PUCCH format 4; $N_{sc}^{RB}$ represents the number of subcarriers in one PRB, that is, mapping of $N_{sc,ctrl}^{RB}$ with a DMRS of the PUCCH format which is related to whether there is a spreading factor; $Q_m$ represents an order of modulation and coding; $r$ represents the code rate; and $N_{symbol}^{PUCCH}$ represents the number of OFDM symbols configured by the network-side device.

When $N = N_{symbol}^{PUCCH}$, if $O_{UCI} + O_{CRC} > M_{PRB}^{PUCCH} \cdot N_{sc,ctrl}^{RB} \cdot N_{symbol}^{PUCCH} \cdot Q_m \cdot r$, the number of OFDM symbols for transmitting the PUCCH by the UE is $N_{symbol}^{PUCCH}$, that is, the UE uses the number of OFDM symbols configured by using RRC, to transmit the PUCCH.

(3) The determining a transmission parameter satisfying a preset condition for transmitting the PUCCH includes: first obtaining a spreading factor set configured by the network-side device, where the spreading factor set may include one or more spreading factors; then determining, from the spreading factor set, a largest spreading factor satisfying the preset condition; and finally using the largest spreading factor as the spreading factor for transmitting the PUCCH.

After the spreading factor is determined in the foregoing manner, an orthogonal sequence corresponding to the largest spreading factor can be used as the orthogonal sequence for transmitting the PUCCH.

Specifically, in an actual application, the largest spreading factor satisfying the following inequality is used as the spreading factor for transmitting the PUCCH:

$$O_{UCI} + O_{CRC} \le M_{PRB}^{PUCCH} \cdot N_{sc,ctrl}^{RB} \cdot N_{symbol}^{PUCCH} \cdot Q_m \cdot r / N_{SF}^{PUCCH},$$

where $N_{sc,ctrl}^{RB} = N_{sc}^{RB} / N_{SF}^{PUCCH}$, or $N_{sc,ctrl}^{RB} = N_{sc}^{RB} - N_{sc,DMSR}^{RB} / N_{SF}^{PUCCH}$;

$O_{UCI}$ represents a bit quantity of the UCI; $O_{CRC}$ represents a bit quantity of the cyclic redundancy check CRC; $M_{PRB}^{PUCCH}$ represents the number of PRBs included in M interlaces, that is, the number of PRBs for transmitting the PUCCH; $N_{sc,ctrl}^{RB}$ represents the number of subcarriers for transmitting control information in one PRB; $N_{sc}^{RB}$ represents the number of subcarriers in one PRB; $N_{sc,DMSR}^{RB}$ represents the number of subcarriers for DMRS in one PRB (used only for a PUCCH format in which a DMRS and UCI are frequency division multiplexed; for a PUCCH format in which a DMRS and UCI are time division multiplexed, $N_{sc,DMSR}^{RB} = 0$); $N_{symbol}^{PUCCH}$ represents the number of OFDM symbols configured by the network-side device; $Q_m$ represents an order of modulation and coding; $r$ represents the code rate; and $N_{SF}^{PUCCH}$ represents a spreading factor configured by the network-side device.

When $N_{SF}^{PUCCH}$ is a smallest spreading factor configured by the network-side device, if

$$O_{UCI} + O_{CRC} > M_{PRB}^{PUCCH} \cdot N_{sc,ctrl}^{RB} \cdot N_{symbol}^{PUCCH} \cdot Q_m \cdot r / N_{SF}^{PUCCH}$$
still holds, the spreading factor for transmitting the PUCCH by the UE is a smallest spreading factor configured by the network-side device, that is, the UE uses the smallest spreading factor configured by using RRC, to transmit the PUCCH.

In this embodiment of the present disclosure, the method may be applied to the terminal device, for example, a mobile phone, a tablet personal computer (Tablet Personal Computer), a laptop computer (Laptop Computer), a personal digital assistant (personal digital assistant, PDA), a mobile Internet device (Mobile Internet Device, MID), or a wearable device (Wearable Device). The method may also be applied to the network-side device, for example, the base station.

In this embodiment of the present disclosure, information required for actually transmitting the PUCCH can be adjusted based on the characteristic parameter of the UCI to be fed back, so that resource utilization is improved.

**Embodiment 2**

FIG. 2 is a flowchart of an information processing method according to this embodiment of the present disclosure. The method is applied to a terminal device. As shown in FIG. 2, the method includes the following steps.

Step 201: In a case that a size of a BWP of the terminal device is larger than that of an LBT subband, obtain first information. The first information is used to indicate at least one of the following information: a resource configuration of a PUCCH and a transmission mode of the PUCCH. The transmission mode includes transmission in only one LBT subband or repeated transmission in different LBT subbands of a target bandwidth part.

In this embodiment of the present disclosure, the target bandwidth part is the BWP of the terminal device, or the target bandwidth part is a subset of the BWP of the terminal device. In addition, the target bandwidth part may be configured by a network-side device, or indicated by a network-side device by using downlink control information (downlink control information, DCI), or determined by the terminal device according to a preset rule.

Step 202: Transmit the PUCCH in different LBT subbands in a repetition mode according to the first information.

For example, assuming that the BWP of the terminal device has three LBT subbands, the PUCCH can be repeatedly transmitted in each LBT subband.

In this embodiment of the present disclosure, the first information is preconfigured or dynamically indicated by using higher layer signaling. The first information may include at least one of the following:

the number of interlaces allocated to the PUCCH and information about an LBT subband in which the PUCCH is located;
the number of interlaces allocated to the PUCCH, an index (index) of a start physical resource block (Physical Resource Block, PRB) of the interlace, and the number of PRBs occupied by the interlace;
the number of interlaces allocated to the PUCCH, an index of a start PRB of the interlace, and an index of an end PRB of the interlace; and
whether the PUCCH can be transmitted in more than one LBT subband.

In this embodiment of the present disclosure, when the terminal device works in a large bandwidth, how the PUCCH is transmitted and multiplexed is clear, so that reliability of communication is ensured.

**Embodiment 3**

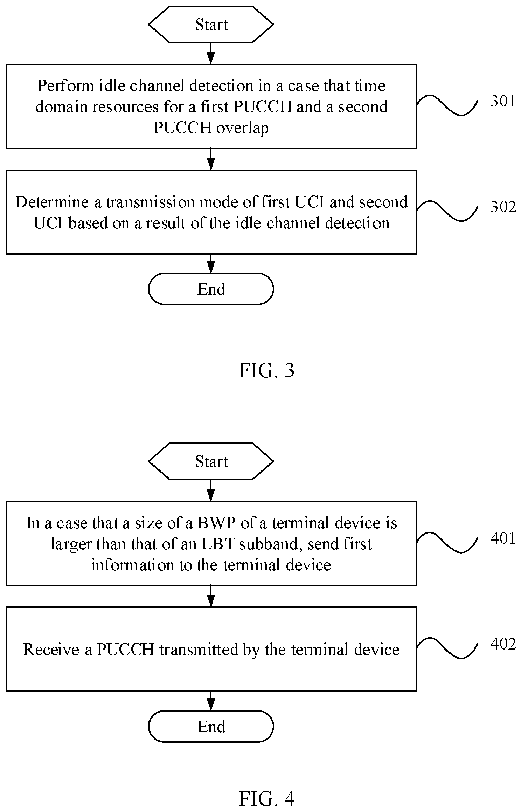

FIG. 3 is a flowchart of an information processing method according to this embodiment of the present disclosure. The method is applied to a terminal device. As shown in FIG. 3, the method includes the following steps.

Step 301: Perform idle channel detection in a case that time domain resources for a first PUCCH and a second PUCCH overlap, where the first PUCCH corresponds to first UCI and the second PUCCH corresponds to second UCI.

Step 302: Determine a transmission mode of the first UCI and the second UCI based on a result of the idle channel detection.

This step includes: determining, based on a multiplexing rule, a multiplex PUCCH after the first UCI and the second UCI are multiplexed; and
in a case that the multiplex PUCCH includes the first PUCCH or the second PUCCH, transmitting the first UCI and/or the second UCI based on the result of the idle channel detection, if either of the following conditions is satisfied:

the first PUCCH and the second PUCCH have different start symbols, and the first PUCCH and the second PUCCH are located in different LBT subbands; or
in a case that the multiplex PUCCH includes a third PUCCH, transmitting the first UCI and the second UCI based on the result of the idle channel detection, if either of the following conditions is satisfied:

> any two or three of the first PUCCH, the second PUCCH, and the third PUCCH have different start symbols, and any two or three of the first PUCCH, the second PUCCH, and the third PUCCH are located in different LBT subbands,
> where the third PUCCH is a PUCCH other than the first PUCCH and the second PUCCH.

Specifically, the performing idle channel detection includes: performing idle channel detection on the multiplex PUCCH before the multiplex PUCCH is transmitted or in an LBT subband in which the multiplex PUCCH is located; and the determining a transmission mode of the first UCI and the second UCI includes:
in a case that a result of the idle channel detection before the multiplex PUCCH is transmitted or in the LBT subband in which the multiplex PUCCH is located indicates "idle", transmitting the first UCI and the second UCI on the multiplexed PUCCH.

In a case that a result of the idle channel detection before the multiplex PUCCH is transmitted or in the LBT subband in which the multiplex PUCCH is located indicates "busy", idle channel detection is performed before the first PUCCH or the second PUCCH, or in an LBT subband in which the first PUCCH or the second PUCCH is located; and in a case that a result of the idle channel detection before the first PUCCH or the second PUCCH or in the LBT subband the first PUCCH or the second PUCCH is located indicates "idle", the first UCI or the second UCI is transmitted.

A network-side device performs blind detection. If the first PUCCH is received, the network-side device can determine that the first PUCCH carries the first UCI, or the first UCI and the second UCI; if the second PUCCH is received, the network-side device can determine that the first PUCCH carries the second UCI, or the first UCI and the second UCI; or if the third PUCCH is received, the network-side device can determine that the third PUCCH carries the first UCI and the second UCI.

In this embodiment of the present disclosure, even when channel monitoring finds one PUCCH busy, it is still possible that UCI transmission be performed on other channels, thereby facilitating system access in NRU (NR in Unlicensed Spectrum, NR working in unlicensed spectrum), increasing a possibility of sending uplink control information, and improving effectiveness of system communication.

## Embodiment 4

FIG. 4 is a flowchart of an information processing method according to this embodiment of the present disclosure. The method is applied to a network-side device. As shown in FIG. 4, the method includes the following steps.

Step 401: In a case that a size of a BWP of a terminal device is larger than that of an LBT subband, send first information to the terminal device.

Step 402: Receive a PUCCH transmitted by the terminal device, where the PUCCH is transmitted by the terminal device in different LBT subbands of a target bandwidth part in a repetition mode according to the first information.

The first information is used to indicate at least one of the following information: a resource configuration of the PUCCH and a transmission mode of the PUCCH; and
the target bandwidth part is the BWP of the terminal device, or the target bandwidth part is a subset of the BWP of the terminal device.

On a basis of the foregoing embodiment, to further improve communication efficiency, the method may further include:
configuring the target bandwidth part, or indicating the target bandwidth part to the terminal device by using DCI.

The first information includes any one of the following:

> the number of interlaces allocated to the PUCCH and information about an LBT subband in which the PUCCH is located;
> the number of interlaces allocated to the PUCCH, an index of a start physical resource block PRB of the interlace, and the number of PRBs occupied by the interlace;
> the number of interlaces allocated to the PUCCH, an index of a start physical resource block PRB of the interlace, and an index of an end PRB of the interlace; and
> whether the PUCCH can be transmitted in more than one LBT subband.

In this embodiment of the present disclosure, when the terminal device works in a large bandwidth, how the PUCCH is transmitted and multiplexed is clear, so that reliability of communication is ensured.

An embodiment of the present disclosure provides a PUCCH information processing method in a case of an NR unlicensed band. The method mainly includes:
when a PUCCH transmission format based on an interlace structure is scheduled for UE and the corresponding PUCCH transmission format is capable of supporting UCI of more than two bits, the UE determines at least one of the following based on a bit quantity and a code rate of UCI to be fed back:

> (1) the UE determines, based on the bit quantity and code rate of current UCI to be fed back, the number of interlaces actually used for transmitting a PUCCH;
> (2) the UE determines, based on the bit quantity and code rate of current UCI to be fed back, the number of OFDM symbols actually used for transmitting a PUCCH;
> (3) the UE determines, based on the bit quantity and code rate of current UCI to be fed back, a spreading factor actually used for transmitting a PUCCH, and may further determine an orthogonal sequence.

If a bandwidth of a current BWP of the UE is larger than 20 MHz (the bandwidth is an integer multiple of 20 MHz, that is, N×20 MHz), for PUCCH transmission based on an interlaced resource block structure:
PUCCH resource configuration mode: a base station indicates an interlace allocated to the PUCCH and an LBT subband in which the PUCCH is located, or an interlace allocated to the PUCCH (which may include a start interlace index and the number of interlaces), a start PRB index corresponding to the interlace, and the number of occupied PRBs (or a start PRB index and an end PRB index). If PUCCH transmission based on the interlaced resource block structure is scheduled for the UE, the UE transmits the PUCCH in N bandwidths of 20 MHz in a repetition mode based on the indication or configuration of the base station.
If time domain resources for two PUCCHs overlap, the UE performs transmission based on an LBT result:

> (a) If time domain resources for two PUCCHs overlap, and are located in different LBT subbands, the UE multiplexes UCI on one channel based on an LBT result, or transmits one of the channels and information.
> (b) If time domain resources for two PUCCHs overlap, and have different start symbols, the UE multiplexes UCI on one channel based on an LBT result, or transmits one of the channels and information.

Particularly, the UE performs LBT before the PUCCH on which the UCI is multiplexed is transmitted or in the LBT subband in which the PUCCH is located. If it is detected that the channel is idle, the UE transmits the multiplexed UCI on the multiplexed PUCCH. If the UE performs LBT before transmitting the PUCCH on which the UCI is multiplexed or in the LBT subband in which the multiplex PUCCH is located and detects that the channel is busy, and the UE performs LBT before another PUCCH is transmitted or in the LBT subband in which the another PUCCH is located and detects that the channel is idle, the UE transmits the another PUCCH and UCI carried in the another PUCCH.
The following describes implementation processes of the embodiments of the present disclosure in detail with reference to specific embodiments.
In an embodiment of the present disclosure, by using RRC signaling, the base station configures PUCCH resource parameters, including a start interlace index $S_{interlace}^{PUCCH}$ corresponding to an allocated interlace, the number $N_{interlace}^{PUCCH}$ of interlaces, a start OFDM symbol position $S_{symbol}^{PUCCH}$, the number $N_{symbol}^{PUCCH}$ of OFDM symbols, a spreading factor $N_{SF}^{PUCCH}$, an orthogonal sequence $w_n$, a code rate $r$, and the like.
For example, the UE adjusts, based on the bit quantity and code rate of UCI to be sent, the number of interlaces of the PUCCH during transmission:
If the number of interlaces allocated to the PUCCH is greater than 1, the UE may adjust, based on the bit quantity and code rate of UCI to be fed back, interlaces used during actual transmission, where

$$O_{UCI} + O_{CRC} \leq M_{PRB}^{PUCCH} \cdot N_{sc,\ ctrl}^{RB} \cdot N_{symbol}^{PUCCH} \cdot Q_m \cdot r$$

, where

$$M_{PRB}^{PUCCH} = \sum_{j=S_{interlace}^{PUCCH}}^{S_{interlace}^{PUCCH}+M} N_{PRB}^{interlace,\ j}, M \leq N_{interlace}^{PUCCH}$$

. In this case, the number of interlaces actually used by the UE for transmission is M, and indexes are $S_{interlace}^{PUCCH}$ to $S_{interlace}^{PUCCH} + M$.
For example, the UE adjusts, based on the bit quantity and code rate of UCI to be sent, the number of OFDM symbols of the PUCCH during transmission:
If the number of interlaces allocated to the PUCCH is greater than 1, the UE may adjust, based on the bit quantity and code rate of UCI to be fed back, the number of OFDM symbols used during actual transmission, where

$$O_{UCI} + O_{CRC} \leq M_{PRB}^{PUCCH} \cdot N_{sc,\ ctrl}^{RB} \cdot N \cdot Q_m \cdot r$$ , where $N \leq N_{symbol}^{PUCCH}$ . In this case, the number of PUCCH symbols used by the UE for transmission is N, and indexes are $S_{symbol}^{PUCCH}$ to $S_{symbol}^{PUCCH} + N$ .

For example, the UE adjusts, based on the bit quantity and code rate of UCI to be sent, a spreading factor (and an orthogonal sequence) used for the PUCCH during transmission:

The base station configures different spreading factors for each PUCCH, for example, $N_{SF,1}^{PUCCH} = 2$ and

$N_{SF,2}^{PUCCH} = 4$ , and each spreading factor corresponds to an orthogonal sequence $w_{n,1}$ or $w_{n,2}$.

If the number of interlaces allocated to the PUCCH is greater than 1, the UE may adjust interlaces during actual transmission, based on the bit quantity and code rate of UCI to be fed back, where

$$O_{UCI} + O_{CRC} \leq M_{PRB}^{PUCCH} \cdot N_{sc}^{RB} \cdot N_{symbol}^{PUCCH} \cdot Q_m \cdot r / N_{SF}^{PUCCH}$$ . For a spreading factor, the UE tries from a largest spreading factor, and then a second largest spreading factor, until a largest spreading factor that satisfies the foregoing inequality.

To be specific, if $N_{SF}^{PUCCH} = N_{SF,2}^{PUCCH} = 4$ , which satisfies the foregoing inequality, the spreading factor used by the UE for transmission is $N_{SF}^{PUCCH} = N_{SF,2}^{PUCCH}$ , and the orthogonal sequence is $w_{n,2}$; otherwise, the spreading factor used by the UE for transmission is $N_{SF}^{PUCCH} = N_{SF,1}^{PUCCH}$ , and the orthogonal sequence is $w_{n,1}$.

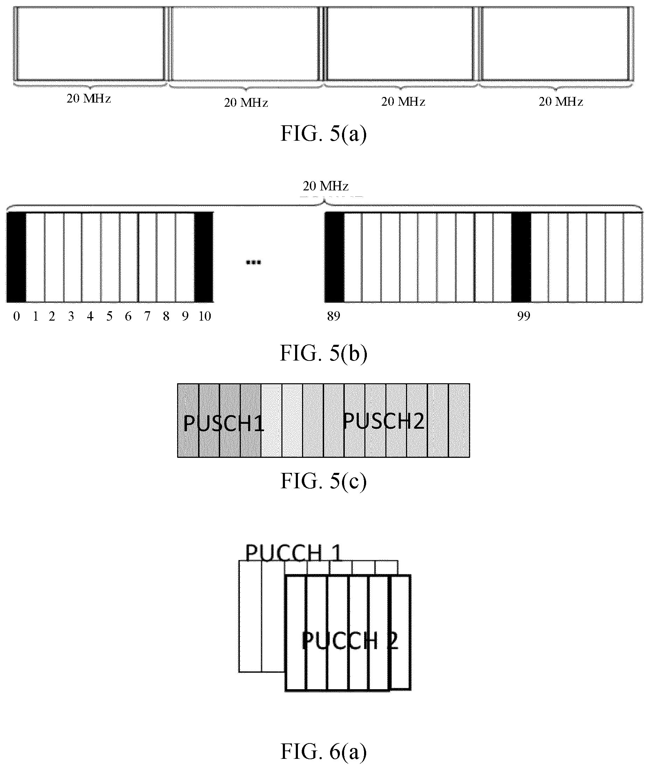

As shown in FIG. 5(a) and FIG. 5(b), a UL BWP bandwidth activated by the UE is 80 MHz. For transmission of the PUCCH based on the interlace structure, because generally only a few PRBs are required by the PUCCH, transmission of the PUCCH is usually performed in a 20 MHz bandwidth. PUCCH transmission designs, including a transmission sequence, an orthogonal sequence, rate matching, and the like, are all in one or more interlaces within 20 MHz. However, if the BWP bandwidth configured for the UE is wideband transmission, in some cases, transmitting the PUCCH in the entire BWP helps the UE preempt a channel and avoid unnecessary LBT. For example, as shown in FIG. 5(c), two PUSCHs are scheduled for the UE, and each PUSCH occupies an 80 MHz bandwidth, but the two PUSCHs are not continuous in time domain, and a PUCCH is scheduled between the PUSCHs. If the PUCCH channel bandwidth is 20 MHz, in other 60 MHz without the PUCCH, because there is a gap between the two PUSCHs, a channel resource may be preempted by another access point before a PUSCH 2 is transmitted, and consequently the PUSCH 2 cannot be transmitted. In this case, the UE may transmit the PUCCH in the entire BWP based on an instruction of the base station. To simplify the PUCCH design, the UE repeats the PUCCH transmitted in 20 MHz in different LBT subbands in a repetition mode.

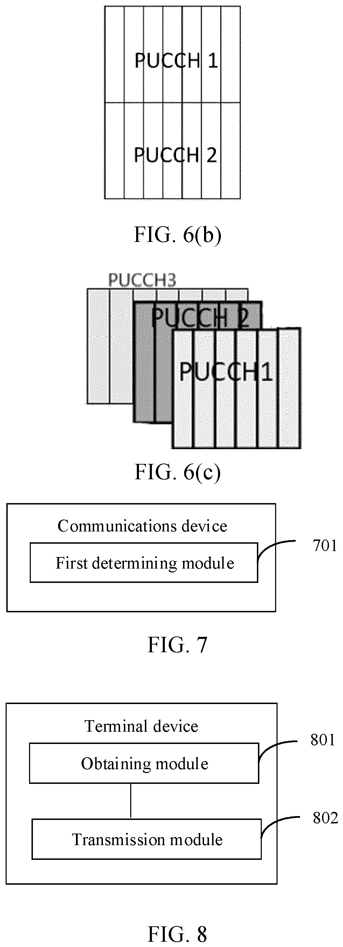

As shown in FIG. 6(a) and FIG. 6(b), a PUCCH 1 is a channel state information (Channel State Information, CSI) PUCCH, and a PUCCH 2 is a scheduling request (Scheduling Request, SR) PUCCH. The two PUCCHs are located in a same LBT subband, but have different start symbols. Based on a UCI multiplexing rule, when time domain resources for the CSI PUCCH and the SR PUCCH overlap, the UE multiplexes an SR on the CSI PUCCH, that is, the SR is transmitted on the PUCCH 1. The UE performs LBT before the PUCCH 1 is transmitted; and if detecting that the channel is idle, sends the PUCCH 1; or if detecting that the channel is busy, cannot transmit the PUCCH 1.

According to this embodiment of the present disclosure, for example, in FIG. 6 (a), if the UE detects, before the PUCCH 1 is transmitted, that the channel is idle, the UE transmits the CSI and the SR on the PUCCH 1; if detecting that the channel is busy, the UE cannot transmit the PUCCH 1; if the SR is positive, the UE may continue to perform LBT before the PUCCH 2; if the UE detects that the channel is idle in this case, the UE transmits the positive SR (the UE does not transmit the CSI) through the PUCCH 2.

In FIG. 6(b), the PUCCH 1 and the PUCCH 2 are located in different subbands. Therefore, the UE may perform LBT in different LBT subbands separately. If detecting, in the LBT subband in which the PUCCH 1 is located, that the channel is idle, the UE transmits the CSI and the SR on the PUCCH 1; if the subband in which the PUCCH 1 is located is busy, and the subband in which the PUCCH 2 is located is idle, the UE transmits the positive SR (without transmitting the CSI) through the PUCCH 2.

In FIG. 6(a) or FIG. 6(b), if the PUCCH 1 is a CSI PUCCH, the PUCCH 2 is an SPS hybrid automatic repeat request acknowledgement (Hybrid automatic repeat request acknowledgement, HARQ-ACK) PUCCH. Based on the UCI multiplexing rule, a HARQ-ACK is multiplexed on the CSI PUCCH for transmission. If the UE detects, before the PUCCH 1 or in the LBT subband in which the PUCCH 1 is located, that the channel is idle, the UE transmits the CSI and the HARQ-ACK on the PUCCH 1; if the UE detects, before the PUCCH 1 or in the LBT subband in which the PUCCH 1 is located, that the channel is busy, and the UE detects, before the PUCCH 2 or in the LBT subband in which the PUCCH 2 is located, that the channel is idle, the UE transmits the HARQ-ACK (the UE does not transmit the CSI) on the PUCCH 2.

As shown in FIG. 6(c), the PUCCH 1 is a PUCCH carrying a HARQ-ACK corresponding to a physical downlink shared channel (Physical downlink shared channel, PDSCH) dynamically scheduled by a PDCCH, and the PUCCH 2 is a CSI PUCCH. A PUCCH 3 is a PUCCH for multiplexing the HARQ-ACK and the CSI and determined based on a rule for multiplexing the HARQ-ACK and the CSI. As shown in the figure, if the UE detects, before the PUCCH 3 is transmitted, that the channel is idle, the UE transmits the PUCCH 3 (carrying the HARQ-ACK and the CSI); if detecting that the channel is busy, the UE may continue to perform LBT before the PUCCH 2; if detecting, before the PUCCH 2 is transmitted, that the channel is idle, the UE may transmit the PUCCH 2 (carrying the CSI); if detecting that the channel is busy, the UE may continue to perform LBT before the PUCCH 1; if detecting, before the PUCCH 1 is transmitted, that the channel is idle, the UE may transmit the PUCCH 1 (carrying the HARQ-ACK).

In the foregoing embodiment, optionally, the UE detects a channel idle state before the multiplex PUCCH is transmitted or in the LBT subband in which the multiplex PUCCH is located. If it is detected that the channel is idle, the multiplex PUCCH and multiplexed UCI of the multiplex PUCCH are transmitted; if it is detected that the channel is busy, and if the first PUCCH or the second PUCCH and the multiplex PUCCH are located in different subbands, or a start symbol of the first PUCCH or the second PUCCH is later than a start symbol of the multiplexed PUCCH, the UE may perform idle channel detection in the subband in which the first PUCCH or the second PUCCH is located or before the first PUCCH or the second PUCCH is transmitted; if detecting that the channel is idle, the UE transmits the first PUCCH and the UCI of the first PUCCH, or the second PUCCH and the UCI of the second PUCCH.

In another implementation of this embodiment of the present disclosure, if the multiplexed PUCCH, the first PUCCH, and the second PUCCH have different start symbols, the UE performs, before the PUCCHs are transmitted, idle channel detection in a chronological order of the start symbols corresponding to the PUCCHs. If it is detected that the channel is idle before a PUCCH having an earliest start symbol is transmitted, the corresponding PUCCH and its UCI are transmitted; if it is detected that the channel is busy, idle channel detection is performed before a PUCCH after the PUCCH having the earliest start symbol; if it is detected that the channel is idle, the corresponding PUCCH and its UCI are transmitted, and so on, until a PUCCH having a latest start symbol.

As can be seen from above, in this embodiment of the present disclosure, a method for PUCCH transmission in NRU is provided, including adaptive adjustment of PUCCH transmission resources (interlace, symbol, and spreading factor), a method for PUCCH transmission in a broadband case, and a method for PUCCH multiplexing, thereby improving resource utilization, facilitating system access in NRU, and improving effectiveness of system communication.

## Embodiment 5

As shown in FIG. 7, a communications device in this embodiment of the present disclosure may include:
a first determining module 701, configured to: in a case that a physical uplink control channel PUCCH transmission format based on an interlace structure is scheduled for the terminal device, determine, based on a characteristic parameter of UCI to be fed back, a transmission parameter for transmitting a PUCCH.

The transmission parameter includes at least one of the following:

the number of interlaces for transmitting the PUCCH according to the invention as claimed;
the number of OFDM symbols for transmitting the PUCCH;
a spreading factor for transmitting the PUCCH; and
an orthogonal sequence for transmitting the PUCCH.

Optionally, the characteristic parameter includes a bit quantity of the UCI, or, according to the invention as claimed, a bit quantity and a code rate of the UCI.

According to the invention as claimed, the first determining module 701 is specifically configured to determine, based on the characteristic parameter of the UCI, a transmission parameter satisfying a preset condition for transmitting the PUCCH, where the preset condition is: a code rate of uplink information to be transmitted on the PUCCH is lower than or equal to a configured code rate; and the uplink information includes the UCI, or, according to the invention as claimed, the uplink information includes the UCI and a CRC.

Optionally, the first determining module 701 is specifically configured to determine the minimum number of interlaces satisfying the preset condition; or determine the minimum number of OFDM symbols satisfying the preset condition.

Optionally, the first determining module 701 is specifically configured to: obtain a spreading factor set configured by a network-side device; determine, from the spreading factor set, a largest spreading factor satisfying the preset condition; and use the largest spreading factor as the spreading factor for transmitting the PUCCH.

Optionally, the first determining module is specifically configured to use an orthogonal sequence corresponding to the largest spreading factor as the orthogonal sequence for transmitting the PUCCH.

The communications device in this embodiment of the present disclosure may be a terminal device or a network-side device. This embodiment is an embodiment of a communications device (terminal device or network-side device) corresponding to the information processing method in the foregoing Embodiment 1. The foregoing method embodiments are all applicable to the embodiment of the terminal device, with the same technical effect achieved.

In this embodiment of the present disclosure, information required for actually transmitting the PUCCH can be adjusted based on the characteristic parameter of the UCI to be fed back, so that resource utilization is improved.

**Embodiment 6**

As shown in FIG. 8, a terminal device in this embodiment of the present disclosure may include:
an obtaining module 801, configured to obtain first information in a case that a size of a BWP of the terminal device is larger than that of a listen before talk LBT subband; and a transmission module 802, configured to transmit a PUCCH in different LBT subbands of a target bandwidth part in a repetition mode according to the first information, where the first information is used to indicate at least one of the following information: a resource configuration of the PUCCH and a transmission mode of the PUCCH; and the target bandwidth part is the BWP of the terminal device, or the target bandwidth part is a subset of the BWP of the terminal device.

Optionally, the target bandwidth part is configured by a network-side device, or indicated by a network-side device by using downlink control information DCI, or obtained by the terminal device according to a preset rule.

Optionally, the first information is preconfigured or dynamically indicated by using higher layer signaling; and the first information includes at least one of the following:

the number of interlaces allocated to the PUCCH and information about an LBT subband in which the PUCCH is located;
the number of interlaces allocated to the PUCCH, an index of a start physical resource block PRB of the interlace, and the number of PRBs occupied by the interlace;
the number of interlaces allocated to the PUCCH, an index of a start physical resource block PRB of the interlace, and an index of an end PRB of the interlace; and
whether the PUCCH can be transmitted in more than one LBT subband.

This embodiment is an embodiment of a terminal device corresponding to the information processing method in the foregoing Embodiment 2. The foregoing method embodiments are all applicable to the embodiment of the terminal device, with the same technical effect achieved.

In this embodiment of the present disclosure, when the terminal device works in a large bandwidth, how the PUCCH is transmitted and multiplexed is clear, so that reliability of communication is ensured.

**Embodiment 7**

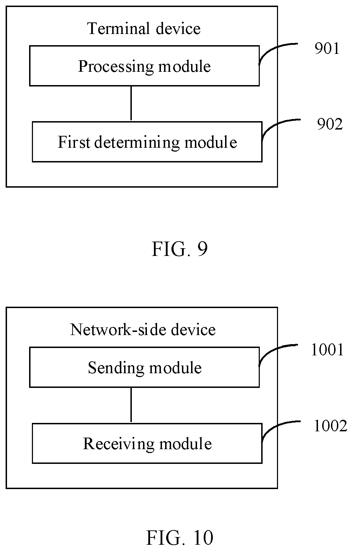

As shown in FIG. 9, a terminal device in this embodiment of the present disclosure may include:
a processing module 901, configured to perform idle channel detection in a case that time domain resources for a first PUCCH and a second PUCCH overlap, where the first PUCCH corresponds to first UCI and the second PUCCH corresponds to second UCI; and a first determining module 902, configured to determine a transmission mode of the first UCI and the second UCI based on a result of the idle channel detection.

Optionally, the first determining module 902 may include:

a first determining submodule, configured to determine, based on a multiplexing rule, a multiplex PUCCH after the first UCI and the second UCI are multiplexed; and
a second determining submodule, configured to: in a case that the multiplex PUCCH includes the first PUCCH or the second PUCCH, transmit the first UCI and/or the second UCI based on the result of the idle channel detection, if either of the following conditions is satisfied: the first PUCCH and the second PUCCH have different start symbols, and the first PUCCH and the second PUCCH are located in different LBT subbands; or
in a case that the multiplex PUCCH includes a third PUCCH, transmit the first UCI and the second UCI based on the result of the idle channel detection, if either of the following conditions is satisfied:

any two or three of the first PUCCH, the second PUCCH, and the third PUCCH have different start symbols, and any two or three of the first PUCCH, the second PUCCH, and the third PUCCH are located in different LBT subbands,
where the third PUCCH is a PUCCH other than the first PUCCH and the second PUCCH.

Optionally, the processing module 901 is configured to perform idle channel detection on the multiplex PUCCH before the multiplex PUCCH is transmitted or in an LBT subband in which the multiplex PUCCH is located; and the first determining module 902 is specifically configured to: in a case that a result of the idle channel detection before the multiplex PUCCH is transmitted or in the LBT subband in which the multiplex PUCCH is located indicates "idle", transmit the first UCI and the second UCI on the multiplexed PUCCH.

Optionally, the processing module 901 is configured to: in a case that a result of the idle channel detection before the multiplex PUCCH is transmitted or in the LBT subband in which the multiplex PUCCH is located indicates "busy", perform idle channel detection before the first PUCCH or the second PUCCH is transmitted, or in an LBT subband in which the first PUCCH or the second PUCCH is located; and the first determining module 902 is specifically configured to: in a case that a result of the idle channel detection before the first PUCCH or the second PUCCH or inthe LBT subband the first PUCCH or the second PUCCH is located indicates "idle", transmit the first UCI or the second UCI.

This embodiment is an embodiment of a terminal device corresponding to the information processing method in the foregoing Embodiment 3. The foregoing method embodiments are all applicable to the embodiment of the terminal device, with the same technical effect achieved.

In this embodiment of the present disclosure, even when channel monitoring finds one PUCCH busy, it is still possible that UCI transmission be performed on other channels, thereby facilitating system access in NRU, increasing a possibility of sending uplink control information, and improving effectiveness of system communication.

**Embodiment 8**

As shown in FIG. 10, a network-side device in this embodiment of the present disclosure may include:

a sending module 1001, configured to: in a case that a size of a BWP of a terminal device is larger than that of an LBT subband, send first information to the terminal device; and
a receiving module 1002, configured to receive a PUCCH transmitted by the terminal device, where the PUCCH is transmitted by the terminal device in different LBT subbands of a target bandwidth part in a repetition mode according to the first information, where
the first information is used to indicate at least one of the following information: a resource configuration of the PUCCH and a transmission mode of the PUCCH; and the target bandwidth part is the BWP of the terminal device, or the target bandwidth part is a subset of the BWP of the terminal device.

Optionally, the network-side device may further include a processing module, configured to configure the target bandwidth part, or indicate the target bandwidth part to the terminal device by using DCI.

Optionally, the first information includes any one of the following:

the number of interlaces allocated to the PUCCH and information about an LBT subband in which the PUCCH is located;
the number of interlaces allocated to the PUCCH, an index of a start physical resource block PRB of the interlace, and the number of PRBs occupied by the interlace;
the number of interlaces allocated to the PUCCH, an index of a start physical resource block PRB of the interlace, and an index of an end PRB of the interlace; and
whether the PUCCH can be transmitted in more than one LBT subband.

This embodiment is an embodiment of a network-side device corresponding to the information processing method in the foregoing Embodiment 4. The foregoing method embodiments are all applicable to the embodiment of the terminal device, with the same technical effect achieved.

In this embodiment of the present disclosure, when the terminal device works in a large bandwidth, how the PUCCH is transmitted and multiplexed is clear, so that reliability of communication is ensured.

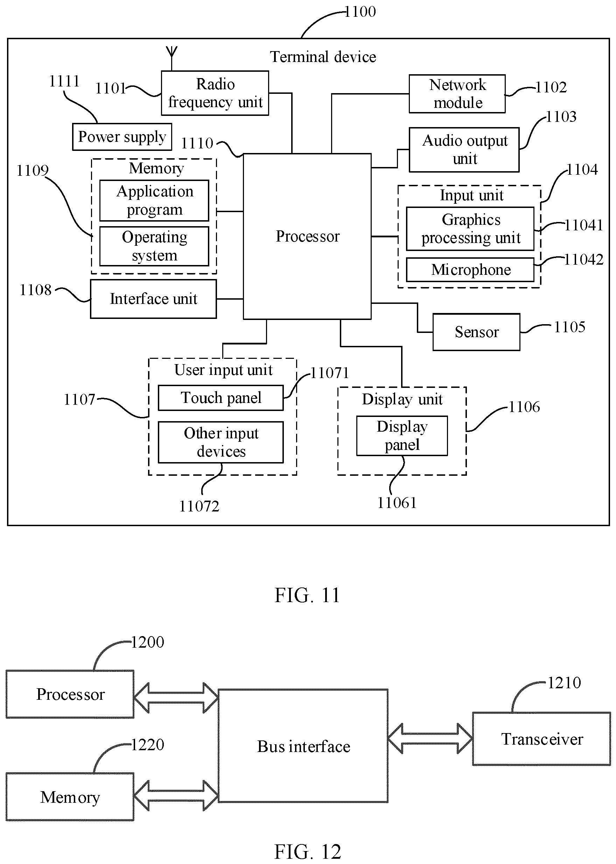

FIG. 11 is a schematic structural diagram of hardware of a terminal device for implementing the embodiments of the present disclosure. The terminal device 1100 includes but is not limited to components such as a radio frequency unit 1101, a network module 1102, an audio output unit 1103, an input unit 1104, a sensor 1105, a display unit 1106, a user input unit 1107, an interface unit 1108, a memory 1109, a processor 1110, and a power supply 1111. A person skilled in the art can understand that the structure of the terminal device shown in FIG. 11 does not constitute any limitation on the terminal device. The terminal device may include more or fewer components than those shown in the figure, or a combination of some components, or the components disposed differently. In this embodiment of the present disclosure, the terminal device includes but is not limited to a mobile phone, a tablet computer, a laptop computer, a palmtop computer, an in-vehicle mobile terminal, a wearable device, a pedometer, and the like.

The processor 1110 is configured to perform the steps of the information processing method in Embodiment 1, with the same technical effect achieved. Alternatively, the processor 1110 is configured to perform the steps of the information processing method in Embodiment 2, with the same technical effect achieved. Alternatively, the processor 1110 is configured to perform the steps of the information processing method in Embodiment 3, with the same technical effect achieved.

It should be understood that in this embodiment of the present disclosure, the radio frequency unit 1101 may be configured to receive and send information, or to receive and send a signal in a call process, and specifically, after receiving downlink data from a base station, send the downlink data to the processor 1110 for processing; and also send uplink data to the base station. Generally, the radio frequency unit 1101 includes but is not limited to an antenna, at least one amplifier, a transceiver, a coupler, a low noise amplifier, a duplexer, and the like. In addition, the radio frequency unit 1101 may also communicate with a network and other devices via a wireless communications system.

The terminal device provides a user with wireless broadband internet access through the network module 1102, for example, helping the user to transmit and receive e-mails, browse web pages, and access streaming media.

The audio output unit 1103 may convert audio data received by the radio frequency unit 1101 or the network module 1102 or stored in the memory 1109 into an audio signal and output the audio signal as a sound. In addition, the audio output unit 1103 may further provide audio output (for example, a call signal received sound or a message received sound) related to a specific function performed by the terminal device 1100. The audio output unit 1103 includes a speaker, a buzzer, a receiver, and the like.

The input unit 1104 is configured to receive an audio or video signal. The input unit 1104 may include a graphics processing unit (Graphics Processing Unit, GPU) 11041 and a microphone 11042. The graphics processing unit 11041 processes image data of a still picture or video obtained by an image capture apparatus (such as a camera) in a video capture mode or an image capture mode. A processed image frame may be displayed on the display unit 1106. The image frame processed by the graphics processing unit 11041 may be stored in the memory 1109 (or another storage medium) or be sent by the radio frequency unit 1101 or the network module 1102. The microphone 11042 is capable of receiving sounds and processing such sounds into audio data. The processed audio data can be converted into a format that can be sent to a mobile communication base station through the radio frequency unit 1101 in a telephone call mode, for outputting.

The terminal device 1100 may further include at least one sensor 1105, for example, an optical sensor, a motion sensor, and other sensors. Specifically, the optical sensor includes an ambient light sensor and a proximity sensor. The ambient light sensor may adjust luminance of the display panel 11061 based on brightness of ambient light, and the proximity sensor may turn off the display panel 11061 and/or backlight when the terminal device 1100 moves close to an ear. As a type of motion sensor, an accelerometer sensor can detect magnitudes of accelerations in all directions (usually three axes), can detect a magnitude and a direction of gravity when the mobile phone is in a static state, and can be applied to posture recognition (such as screen switching between portrait and landscape, related games, and magnetometer posture calibration) of the terminal device, functions related to vibration recognition (such as pedometer and tapping), and the like. The sensor 1105 may also include a fingerprint sensor, a pressure sensor, an iris sensor, a molecular sensor, a gyroscope, a barometer, a hygrometer, a thermometer, an infrared sensor, and the like. Details are not described herein.

The display unit 1106 is configured to display information input by the user or information provided to the user. The display unit 1106 may include the display panel 11061, and the display panel 11061 may be configured in a form of a liquid crystal display (Liquid Crystal Display, LCD), an organic light-emitting diode (Organic Light-Emitting Diode, OLED), or the like.

The user input unit 1107 may be configured to receive input digit or character information and generate key signal input related to user setting and function control of the terminal device. Specifically, the user input unit 1107 includes a touch panel 11071 and other input devices 11072. The touch panel 11071 is also referred to as a touchscreen and can collect a touch operation (such as an operation performed by the user on the touch panel 11071 or near the touch panel 11071 with a finger or by using any proper object or accessory such as a stylus) of the user on or near the touch panel 11071. The touch panel 11071 may include two parts: a touch detection apparatus and a touch controller. The touch detection apparatus detects a touch azimuth of a user, detects a signal brought by a touch operation, and transmits the signal to the touch controller. The touch controller receives touch information from the touch detection apparatus, converts the touch information into touchpoint coordinates, and sends the touchpoint coordinates to the processor 1110, and receives a command sent by the processor 1110 and executes the command. In addition, the touch panel 11071 may be implemented in a plurality of forms, for example, as a resistive, capacitive, infrared, or surface acoustic wave touch panel. The user input unit 1107 may further include the other input devices 11072 in addition to the touch panel 11071. Specifically, the other input devices 11072 may include but are not limited to a physical keyboard, a function key (such as a volume control key or a switch key), a trackball, a mouse, and a joystick. Details are not described herein.

Further, the touch panel 11071 may cover the display panel 11061. When detecting a touch operation on or near the touch panel 11071, the touch panel 11071 transmits the touch operation to the processor 1110 to determine a type of a touch event. Then, the processor 1110 provides a corresponding visual output on the display panel 11061 based on the type of the touch event. Although in FIG. 11, the touch panel 11071 and the display panel 11061 act as two independent parts to implement input and output functions of the terminal device, in some embodiments, the touch panel 11071 and the display panel 11061 may be integrated to implement the input and output functions of the terminal device. This is not specifically limited herein.

The interface unit 1108 is an interface between an external apparatus and the terminal device 1100. For example, an external apparatus may include a wired or wireless headset port, an external power supply (or a battery charger) port, a wired or wireless data port, a memory port, a port for connecting an apparatus with an identification module, an audio input/output (I/O) port, a video I/O port, an earphone port, and the like. The interface unit 1108 may be configured to receive an input (for example, data information or power) from an external apparatus and transmit the received input to one or more elements within the terminal device 1100, or may be configured to transmit data between the terminal device 1100 and the external apparatus.

The memory 1109 may be configured to store software programs and various data. The memory 1109 may primarily include a program storage area and a data storage area. The program storage area may store an operating system, an application program (such as an audio play function and an image play function) required by at least one function, and the like. The data storage area may store data (such as audio data and a phone book) created based on use of the mobile phone. In addition, the memory 1109 may include a high-speed random access memory, and may further include a non-volatile memory such as a disk storage device, a flash memory device, or another volatile solid-state storage device.

The processor 1110 is a control center of the terminal device, uses various interfaces and lines to connect parts of the entire terminal device, and executes various functions and processing data of the terminal device by running or executing software programs and/or modules stored in the memory 1109 and invoking data stored in the memory 1109, so as to perform overall monitoring on the terminal device. The processor 1110 may include one or more processing units. Optionally, the processor 1110 may integrate an application processor and a modem processor. The application processor mainly processes the operating system, a user interface, the application program, and the like. The modem processor mainly processes wireless communication. It can be understood that the modem processor may alternatively be not integrated in the processor 1110.

The terminal device 1100 may further include a power supply 1111 (such as a battery) that supplies power to components. Optionally, the power supply 1111 may be logically connected to the processor 1110 through a power management system. In this way, functions such as charge management, discharge management, and power consumption management are implemented by using the power management system.

In addition, the terminal device 1100 includes some functional modules that are not shown. Details are not described herein.

Optionally, an embodiment of the present disclosure further provides a terminal device, including a processor 1110, a memory 1109, and a computer program stored in the memory 1109 and capable of running on the processor 1110. When the computer program is executed by the processor 1110, the processes of the foregoing embodiment of the information processing method are implemented, with the same technical effect achieved. To avoid repetition, details are not described again herein.

As shown in FIG. 12, a network-side device in an embodiment of the present disclosure includes a processor 1200, configured to read a program in a memory 1220 to perform the following process:

in a case that a size of a BWP of a terminal device is larger than that of an LBT subband, sending first information to the terminal device; and
receiving a PUCCH transmitted by the terminal device, where the PUCCH is transmitted by the terminal device in different LBT subbands of a target bandwidth part in a repetition mode according to the first information, where the first information is used to indicate at least one of the following information: a resource configuration of the PUCCH and a transmission mode of the PUCCH; and
the target bandwidth part is the BWP of the terminal device, or the target bandwidth part is a subset of the BWP of the terminal device; and
a transceiver 1210, configured to receive and send data under control of the processor 1200.

In FIG. 12, a bus architecture may include any quantity of interconnect buses and bridges, specifically for interconnecting various circuits of one or more processors represented by the processor 1200 and a memory represented by the memory 1220. The bus architecture may further interconnect various other circuits such as a peripheral device, a voltage regulator, and a power management circuit. These are all well known in the art, and therefore are not further described in this specification. The bus interface provides an interface. The transceiver 1210 may be a plurality of components, that is, the transceiver 1210 includes a transmitter and a receiver, and provides a unit for communicating with various other apparatuses on a transmission medium. The processor 1200 is responsible for management of the bus architecture and general processing, and the memory 1220 is capable of storing data that is used by the processor 1200 during operation.

The processor 1200 is responsible for management of the bus architecture and general processing, and the memory 1220 is capable of storing data that is used by the processor 1200 during operation.

The processor 1200 is further configured to read the computer program to perform the following step: configuring the target bandwidth part, or indicating the target bandwidth part to the terminal device by using DCI.

The first information includes any one of the following:

the number of interlaces allocated to the PUCCH and information about an LBT subband in which the PUCCH is located;

the number of interlaces allocated to the PUCCH, an index of a start physical resource block PRB of the interlace, and the number of PRBs occupied by the interlace;

the number of interlaces allocated to the PUCCH, an index of a start physical resource block PRB of the interlace, and an index of an end PRB of the interlace; and

whether the PUCCH can be transmitted in more than one LBT subband.

An embodiment of the present disclosure further provides a computer-readable storage medium, where a computer program is stored in the computer-readable storage medium. When the computer program is executed by a processor, the processes of the foregoing information processing method embodiment are implemented, with the same technical effect achieved. To avoid repetition, details are not described again herein. The computer-readable storage medium is, for example, a read-only memory (Read-Only Memory, ROM), a random access memory (Random Access Memory, RAM), a magnetic disk, or an optical disc.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude existence of other identical elements in the process, method, article, or apparatus that includes the element.

According to the foregoing description of the implementations, a person skilled in the art may clearly understand that the methods in the foregoing embodiments may be implemented by using software in combination with a necessary common hardware platform, and certainly may alternatively be implemented by using hardware. However, in most cases, the former is a preferred implementation. Based on such an understanding, the technical solutions of the present disclosure essentially, or the part contributing to the prior art may be implemented in a form of a software product. The computer software product is stored in a storage medium (for example, a ROM/RAM, a magnetic disk, or an optical disc), and includes several instructions for instructing a terminal device (which may be a mobile phone, a computer, a server, an air conditioner, a network device, or the like) to perform the method described in the embodiments of the present disclosure.

The foregoing describes the embodiments of the present disclosure with reference to the accompanying drawings. However, the present disclosure is not limited to the foregoing specific implementations. The foregoing specific implementations are merely illustrative rather than restrictive. Inspired by the present disclosure, a person of ordinary skill in the art may develop many other forms without departing from principles of the present disclosure and the protection scope of the present disclosure is defined by the protection scope of the appended claims.

**Claims**

1. An information processing method, comprising:

in a case that a physical uplink control channel, PUCCH, transmission format based on an interlace structure is scheduled for a terminal device, determining (101), based on a characteristic parameter of uplink control information, UCI, to be fed back, a transmission parameter for transmitting a PUCCH;

wherein the characteristic parameter comprises a bit quantity and a code rate of the UCI;

**characterized in that**, the transmission parameter comprises the number of interlaces for transmitting the PUCCH;

wherein the determining (101), based on a characteristic parameter of uplink control information, UCI, to be fed back, a transmission parameter for transmitting a PUCCH comprises:

determining, based on the characteristic parameter of the UCI, a transmission parameter corresponding to a preset condition for transmitting the PUCCH, wherein
the preset condition is: a code rate of uplink information to be transmitted on the PUCCH is lower than or equal to a configured code rate; and
the uplink information comprises the UCI and a cyclic redundancy check, CRC.

2. The method according to claim 1, wherein the transmission parameter further comprises at least one of the following:

the number of orthogonal frequency division multiplexing, OFDM, symbols for transmitting the PUCCH;
a spreading factor for transmitting the PUCCH; and
an orthogonal sequence for transmitting the PUCCH.

3. The method according to claim 1, wherein the determining a transmission parameter corresponding to a preset condition for transmitting the PUCCH comprises:

determining the minimum number of interlaces corresponding to the preset condition; or
determining the minimum number of OFDM symbols corresponding to the preset condition.

4. The method according to claim 1, wherein the determining a transmission parameter corresponding to a preset condition for transmitting the PUCCH comprises:

obtaining a spreading factor set configured by a network-side device;
determining, from the spreading factor set, a largest spreading factor corresponding to the preset condition; and
using the largest spreading factor as the spreading factor for transmitting the PUCCH.

5. A communications device, wherein the communications device is a terminal device or a network-side device and comprises:

a first determining module (701), configured to: in a case that a physical uplink control channel, PUCCH, transmission format based on an interlace structure is scheduled for the terminal device, determine, based on a characteristic parameter of UCI to be fed back, a transmission parameter for transmitting a PUCCH;
wherein the characteristic parameter comprises a bit quantity and a code rate of the UCI;
**characterized in that**, the transmission parameter comprises the number of interlaces for transmitting the PUCCH;
wherein the first determining module (701) is configured to:

determine, based on the characteristic parameter of the UCI, a transmission parameter corresponding to a preset condition for transmitting the PUCCH, wherein
the preset condition is: a code rate of uplink information to be transmitted on the PUCCH is lower than or equal to a configured code rate; and
the uplink information comprises the UCI and a cyclic redundancy check, CRC.

6. The communications device according to claim 5, wherein the transmission parameter further comprises at least one of the following:

the number of orthogonal frequency division multiplexing, OFDM, symbols for transmitting the PUCCH;
a spreading factor for transmitting the PUCCH; and
an orthogonal sequence for transmitting the PUCCH.

7. The communications device according to claim 5, wherein the first determining module (701) is configured to:

determine the minimum number of interlaces corresponding to the preset condition; or
determine the minimum number of OFDM symbols corresponding to the preset condition.

8. The communications device according to claim 5, wherein the first determining module (701) is configured to:

obtain a spreading factor set configured by a network-side device;
determine, from the spreading factor set, a largest spreading factor satisfying the preset condition; and
use the largest spreading factor as the spreading factor for transmitting the PUCCH.

9.  A computer-readable storage medium, wherein the computer-readable storage medium stores instructions which, when executed by a computer, cause the computer to carry out:

in a case that a physical uplink control channel, PUCCH, transmission format based on an interlace structure is scheduled for a terminal device, determining, based on a characteristic parameter of uplink control information, UCI, to be fed back, a transmission parameter for transmitting a PUCCH;
wherein the characteristic parameter comprises a bit quantity and a code rate of the UCI;
**characterized in that**, the transmission parameter comprises the number of interlaces for transmitting the PUCCH;
wherein the computer program is further executed by a processor to implement:

determining, based on the characteristic parameter of the UCI, a transmission parameter corresponding to a preset condition for transmitting the PUCCH, wherein
the preset condition is: a code rate of uplink information to be transmitted on the PUCCH is lower than or equal to a configured code rate; and
the uplink information comprises the UCI and a cyclic redundancy check, CRC.

10. The computer-readable storage medium according to claim 9, wherein the transmission parameter further comprises at least one of the following:

the number of orthogonal frequency division multiplexing, OFDM, symbols for transmitting the PUCCH;
a spreading factor for transmitting the PUCCH; and
an orthogonal sequence for transmitting the PUCCH.

11. The computer-readable storage medium according to claim 9, wherein the instructions further cause the computer to carry out:

determining the minimum number of interlaces corresponding to the preset condition; or
determining the minimum number of OFDM symbols corresponding to the preset condition.

12. The computer-readable storage medium according to claim 9, wherein the instructions further cause the computr to carry out:

obtaining a spreading factor set configured by a network-side device;
determining, from the spreading factor set, a largest spreading factor corresponding to the preset condition; and
using the largest spreading factor as the spreading factor for transmitting the PUCCH.

**Patentansprüche**

1.  Verfahren zur Informationsverarbeitung, das Folgendes aufweist:

in einem Fall, dass ein Übertragungsformat eines physikalischen Uplink-Steuerkanals, PUCCH-Übertragungsformat, basierend auf einer Interlace-Struktur für ein Endgerät geplant ist, Bestimmen (101) eines Übertragungsparameters zum Übertragen eines PUCCH basierend auf einem charakteristischen Parameter von Uplink-Steuerinformationen, UCI, die zurückgespeist werden sollen;
wobei der charakteristische Parameter eine Bitmenge und eine Coderate der UCI aufweist;
**dadurch gekennzeichnet, dass** der Übertragungsparameter die Anzahl von Interlaces zum Übertragen des PUCCH aufweist;
wobei das Bestimmen (101) eines Übertragungsparameters zum Übertragen eines PUCCH basierend auf einem charakteristischen Parameter von Uplink-Steuerinformationen, UCI, die zurückgespeist werden sollen, Folgendes aufweist:

Bestimmen eines Übertragungsparameters, der einer voreingestellten Bedingung zum Übertragen der PUCCH entspricht, basierend auf dem charakteristischen Parameter der UCI, wobei
die voreingestellte Bedingung ist: eine Coderate der auf dem PUCCH zu übertragenden Uplink-Informationen niedriger als eine konfigurierte Coderate oder gleich dieser ist; und
die Uplink-Informationen die UCI und eine zyklische Redundanzprüfung, CRC, aufweisen.

2. Verfahren nach Anspruch 1, wobei der Übertragungsparameter ferner Folgendes aufweist:

   die Anzahl von Symbolen des orthogonalen Frequenzmultiplexverfahrens, OFDM-Symbolen, zum Übertragen des PUCCH; und/oder
   einen Spreizfaktor zum Übertragen des PUCCH; und/oder
   eine orthogonale Sequenz zum Übertragen des PUCCH.

3. Verfahren nach Anspruch 1, wobei das Bestimmen eines Übertragungsparameters, der einer voreingestellten Bedingung zum Übertragen des PUCCH entspricht, Folgendes aufweist:

   Bestimmen der minimalen Anzahl von Interfaces, die der voreingestellten Bedingung entsprechen; oder
   Bestimmen der minimalen Anzahl von OFDM-Symbolen, die der voreingestellten Bedingung entsprechen.

4. Verfahren nach Anspruch 1, wobei das Bestimmen eines Übertragungsparameters, der einer voreingestellten Bedingung zum Übertragen des PUCCH entspricht, Folgendes aufweist:

   Erhalten eines Spreizfaktorsatzes, der von einem netzwerkseitigen Gerät konfiguriert ist;
   Bestimmen, aus dem Spreizfaktorsatz, eines größten Spreizfaktors, der der voreingestellten Bedingung entspricht; und
   Verwenden des größten Spreizfaktors als Spreizfaktor zum Übertragen des PUCCH.

5. Kommunikationsgerät, wobei das Kommunikationsgerät ein Endgerät oder ein netzwerkseitiges Gerät ist und Folgendes aufweist:

   ein erstes Bestimmungsmodul (701), das konfiguriert ist, um: in einem Fall, dass ein Übertragungsformat eines physikalischen Uplink-Steuerkanals, PUCCH-Übertragungsformat, basierend auf einer Interface-Struktur für das Endgerät geplant ist, basierend auf einem charakteristischen Parameter von UCI, die zurückgespeist werden sollen, einen Übertragungsparameter zum Übertragen eines PUCCH zu bestimmen;
   wobei der charakteristische Parameter eine Bitmenge und eine Coderate der UCI aufweist;
   **dadurch gekennzeichnet, dass** der Übertragungsparameter die Anzahl von Interlaces zum Übertragen des PUCCH aufweist;
   wobei das erste Bestimmungsmodul (701) konfiguriert ist, um:

   basierend auf dem charakteristischen Parameter der UCI, einen Übertragungsparameter, der einer voreingestellten Bedingung zum Übertragen des PUCCH entspricht, zu bestimmen, wobei
   die voreingestellte Bedingung ist: eine Coderate von auf dem PUCCH zu übertragenden Uplink-Informationen niedriger als eine konfigurierte Coderate oder gleich dieser ist; und
   die Uplink-Informationen die UCI und eine zyklische Redundanzprüfung, CRC, aufweisen.

6. Kommunikationsgerät nach Anspruch 5, wobei der Übertragungsparameter ferner Folgendes aufweist:

   die Anzahl von Symbolen des orthogonalen Frequenzmultiplexverfahrens, OFDM-Symbolen, zum Übertragen des PUCCH; und/oder
   einen Spreizfaktor zum Übertragen des PUCCH; und/oder
   eine orthogonale Sequenz zum Übertragen des PUCCH.

7. Kommunikationsgerät nach Anspruch 5, wobei das erste Bestimmungsmodul (701) konfiguriert ist, um:

   die minimale Anzahl von Interlaces zu bestimmen, die der voreingestellten Bedingung entsprechen; oder
   die minimale Anzahl von OFDM-Symbolen zu bestimmen, die der voreingestellten Bedingung entsprechen.

8. Kommunikationsgerät nach Anspruch 5, wobei das erste Bestimmungsmodul (701) konfiguriert ist, um:

einen Spreizfaktorsatz zu erhalten, der von einem netzwerkseitigen Gerät konfiguriert ist;

aus dem Spreizfaktorsatz einen größten Spreizfaktor zu bestimmen, der die voreingestellte Bedingung erfüllt; und

den größten Spreizfaktor als den Spreizfaktor zum Übertragen des PUCCH zu verwenden.

9. Computerlesbares Speichermedium, wobei das computerlesbare Speichermedium Anweisungen speichert, die, wenn sie von einem Computer ausgeführt werden, den Computer veranlassen, Folgendes auszuführen:

in einem Fall, dass ein Übertragungsformat eines physikalischen Uplink-Steuerkanals, PUCCH-Übertragungsformat, basierend auf einer Interlace-Struktur für ein Endgerät geplant ist, Bestimmen (101) eines Übertragungsparameters zum Übertragen eines PUCCH basierend auf einem charakteristischen Parameter von Uplink-Steuerinformationen, UCI, die zurückgespeist werden sollen;

wobei der charakteristische Parameter eine Bitmenge und eine Coderate der UCI aufweist;

**dadurch gekennzeichnet, dass** der Übertragungsparameter die Anzahl der Interlaces zum Übertragen des PUCCH aufweist;

wobei das Computerprogramm ferner von einem Prozessor ausgeführt wird, um Folgendes zu auszuführen:

Bestimmen eines Übertragungsparameters, der einer voreingestellten Bedingung zum Übertragen des PUCCH entspricht, basierend auf dem charakteristischen Parameter der UCI, wobei

die voreingestellte Bedingung ist: eine Coderate der auf dem PUCCH zu übertragenden Uplink-Informationen niedriger als eine konfigurierte Coderate oder gleich dieser ist; und

die Uplink-Informationen die UCI und eine zyklische Redundanzprüfung, CRC, aufweisen.

10. Computerlesbares Speichermedium nach Anspruch 9, wobei der Übertragungsparameter ferner Folgendes aufweist:

die Anzahl von Symbolen des orthogonalen Frequenzmultiplexverfahrens, OFDM-Symbolen, zum Übertragen des PUCCH; und/oder

einen Spreizfaktor zum Übertragen des PUCCH; und/oder

eine orthogonale Sequenz zum Übertragen des PUCCH.

11. Computerlesbares Speichermedium nach Anspruch 9, wobei die Anweisungen ferner den Computer veranlassen, Folgendes auszuführen:

Bestimmen der minimalen Anzahl von Interfaces, die der voreingestellten Bedingung entsprechen; oder

Bestimmen der minimalen Anzahl von OFDM-Symbolen, die der voreingestellten Bedingung entsprechen.

12. Computerlesbares Speichermedium nach Anspruch 9, wobei die Anweisungen den Computer ferner veranlassen, Folgendes auszuführen:

Erhalten eines Spreizfaktorsatzes, der von einem netzwerkseitigen Gerät konfiguriert ist;

Bestimmen eines größten Spreizfaktors, der der voreingestellten Bedingung entspricht, aus dem Spreizfaktorsatz; und

Verwenden des größten Spreizfaktors als Spreizfaktor zum Übertragen des PUCCH.

**Revendications**

1. Procédé de traitement d'informations, comprenant :

dans le cas où un format de transmission de canal de commande de liaison montante physique, PUCCH, basé sur une structure entrelacée est programmé pour un dispositif terminal, la détermination (101), sur la base d'un paramètre caractéristique d'informations de commande de liaison montante, UCI, à renvoyer, d'un paramètre de transmission pour transmettre un PUCCH ;

dans lequel le paramètre caractéristique comprend une quantité de bits et un débit de code des UCI ;

**caractérisé en ce que** le paramètre de transmission comprend le nombre d'entrelacements pour transmettre le PUCCH ;

dans lequel la détermination (101), sur la base d'un paramètre caractéristique d'informations de commande de liaison montante, UCI, à renvoyer, d'un paramètre de transmission pour transmettre un PUCCH comprend :

la détermination, sur la base du paramètre caractéristique des UCI, d'un paramètre de transmission correspondant à une condition prédéfinie pour transmettre le PUCCH, dans lequel
la condition prédéfinie est la suivante : un débit de code d'informations de liaison montante à transmettre sur le PUCCH est inférieur ou égal à un débit de code configuré ; et
les informations de liaison montante comprennent les UCI et un contrôle de redondance cyclique, CRC.

2. Procédé selon la revendication 1, dans lequel le paramètre de transmission comprend en outre au moins l'un des éléments suivants :

le nombre de symboles de multiplexage par division orthogonale de la fréquence, OFDM, pour transmettre le PUCCH ;
un facteur d'étalement pour transmettre le PUCCH ; et
une séquence orthogonale pour transmettre le PUCCH.

3. Procédé selon la revendication 1, dans lequel la détermination d'un paramètre de transmission correspondant à une condition prédéfinie pour transmettre le PUCCH comprend :

la détermination du nombre minimum d'entrelacements correspondant à la condition prédéfinie ; ou
la détermination du nombre minimum de symboles OFDM correspondant à la condition prédéfinie.

4. Procédé selon la revendication 1, dans lequel la détermination d'un paramètre de transmission correspondant à une condition prédéfinie pour transmettre le PUCCH comprend :

l'obtention d'un ensemble de facteurs d'étalement configuré par un dispositif côté réseau ;
la détermination, à partir de l'ensemble de facteurs d'étalement, d'un facteur d'étalement le plus grand correspondant à la condition prédéfinie ; et
l'utilisation du facteur d'étalement le plus grand comme facteur d'étalement pour transmettre le PUCCH.

5. Dispositif de communication, dans lequel le dispositif de communication est un dispositif terminal ou un dispositif côté réseau et comprend :

un premier module de détermination (701), configuré pour : dans le cas où un format de transmission de canal de commande de liaison montante physique, PUCCH, basé sur une structure entrelacée est programmé pour le dispositif terminal, déterminer, sur la base d'un paramètre caractéristique d'UCI à renvoyer, un paramètre de transmission pour transmettre un PUCCH ;
dans lequel le paramètre caractéristique comprend une quantité de bits et un débit de code des UCI ;
**caractérisé en ce que** le paramètre de transmission comprend le nombre d'entrelacements pour transmettre le PUCCH ;
dans lequel le premier module de détermination (701) est configuré pour :

déterminer, sur la base du paramètre caractéristique des UCI, un paramètre de transmission correspondant à une condition prédéfinie pour transmettre le PUCCH, dans lequel
la condition prédéfinie est la suivante : un débit de code d'informations de liaison montante à transmettre sur le PUCCH est inférieur ou égal à un débit de code configuré ; et
les informations de liaison montante comprennent les UCI et un contrôle de redondance cyclique, CRC.

6. Dispositif de communication selon la revendication 5, dans lequel le paramètre de transmission comprend en outre au moins l'un des éléments suivants :

le nombre de symboles de multiplexage par division orthogonale de la fréquence, OFDM, pour transmettre le PUCCH ;
un facteur d'étalement pour transmettre le PUCCH ; et
une séquence orthogonale pour transmettre le PUCCH.

7. Dispositif de communication selon la revendication 5, dans lequel le premier module de détermination (701) est configuré pour :

déterminer le nombre minimum d'entrelacements correspondant à la condition prédéfinie ; ou
déterminer le nombre minimum de symboles OFDM correspondant à la condition prédéfinie.

8. Dispositif de communication selon la revendication 5, dans lequel le premier module de détermination (701) est configuré pour :

obtenir un ensemble de facteurs d'étalement configuré par un dispositif côté réseau ;
déterminer, à partir de l'ensemble de facteurs d'étalement, un facteur d'étalement le plus grand satisfaisant à la condition prédéfinie ; et
utiliser le facteur d'étalement le plus grand comme facteur d'étalement pour transmettre le PUCCH.

9. Support de stockage lisible par ordinateur, dans lequel le support de stockage lisible par ordinateur stocke des instructions qui, lorsqu'elles sont exécutées par un ordinateur, amènent l'ordinateur à effectuer :

dans le cas où un format de transmission de canal de commande de liaison montante physique, PUCCH, basé sur une structure entrelacée est programmé pour un dispositif terminal, la détermination, sur la base d'un paramètre caractéristique d'informations de commande de liaison montante, UCI, à renvoyer, d'un paramètre de transmission pour transmettre un PUCCH ;
dans lequel le paramètre caractéristique comprend une quantité de bits et un débit de code des UCI ;
**caractérisé en ce que** le paramètre de transmission comprend le nombre d'entrelacements pour transmettre le PUCCH ;
dans lequel le programme informatique est en outre exécuté par un processeur pour mettre en oeuvre :

la détermination, sur la base du paramètre caractéristique des UCI, d'un paramètre de transmission correspondant à une condition prédéfinie pour transmettre le PUCCH, dans lequel
la condition prédéfinie est la suivante : un débit de code d'informations de liaison montante à transmettre sur le PUCCH est inférieur ou égal à un débit de code configuré ; et
les informations de liaison montante comprennent les UCI et un contrôle de redondance cyclique, CRC.

10. Support de stockage lisible par ordinateur selon la revendication 9, dans lequel le paramètre de transmission comprend en outre au moins l'un des éléments suivants :

le nombre de symboles de multiplexage par division orthogonale de la fréquence, OFDM, pour transmettre le PUCCH ;
un facteur d'étalement pour transmettre le PUCCH ; et
une séquence orthogonale pour transmettre le PUCCH.

11. Support de stockage lisible par ordinateur selon la revendication 9, dans lequel les instructions amènent en outre l'ordinateur à effectuer :

la détermination du nombre minimum d'entrelacements correspondant à la condition prédéfinie ; ou
la détermination du nombre minimum de symboles OFDM correspondant à la condition prédéfinie.

12. Support de stockage lisible par ordinateur selon la revendication 9, dans lequel les instructions amènent en outre l'ordinateur à effectuer :

l'obtention d'un ensemble de facteurs d'étalement configuré par un dispositif côté réseau ;
la détermination, à partir de l'ensemble de facteurs d'étalement, d'un facteur d'étalement le plus grand correspondant à la condition prédéfinie ; et
l'utilisation du facteur d'étalement le plus grand comme facteur d'étalement pour transmettre le PUCCH.

Start

In a case that a PUCCH transmission format based on an interlace structure is scheduled for a terminal device, determine, based on a characteristic parameter of UCI to be fed back, a transmission parameter for transmitting a PUCCH

101

End

FIG. 1

Start

In a case that a size of a BWP of a terminal device is larger than that of an LBT subband, obtain first information

201

Transmit a PUCCH in different LBT subbands in a repetition mode according to the first information

202

End

FIG. 2

Start

Perform idle channel detection in a case that time domain resources for a first PUCCH and a second PUCCH overlap — 301

Determine a transmission mode of first UCI and second UCI based on a result of the idle channel detection — 302

End

FIG. 3

Start

In a case that a size of a BWP of a terminal device is larger than that of an LBT subband, send first information to the terminal device — 401

Receive a PUCCH transmitted by the terminal device — 402

End

FIG. 4

FIG. 5(a)

20 MHz

0 1 2 3 4 5 6 7 8 9 10      89      99

FIG. 5(b)

PUSCH1      PUSCH2

FIG. 5(c)

PUCCH 1

PUCCH 2

FIG. 6(a)

FIG. 6(b)

PUCCH3

FIG. 6(c)

Communications device

First determining module — 701

FIG. 7

Terminal device

Obtaining module — 801

Transmission module — 802

FIG. 8

FIG. 9

FIG. 10

FIG. 11

FIG. 12

**EP 4 016 903 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910748114
- EP 3461050 A1
- US 20180220413 A1
- US 20160036578 A1
- EP 3618328 A1
- WO 2020205741 A1